# EUROPÄISCHE PATENTSCHRIFT

(11) **EP 2 393 674 B1**
(45) Veröffentlichungstag und Bekanntmachung des Hinweises auf die Patenterteilung: **17.04.2013**
(21) Anmeldenummer: 10706497.4
(22) Anmeldetag: 01.02.2010
(51) Int. Cl.: B26D 3/00, B60C 25/05, B26D 1/00

(54) **VORRICHTUNG ZUM TRENNEN EINES AUTOREIFENS VON DER FELGE**
APPARATUS FOR SEPARATING A VEHICLE TIRE FROM THE RIM
APPAREIL POUR SEPARER D'UN PNEUMATIQUE D'UNE JANTE

(30) Priorität: 04.02.2009 DE 202009001322 U; 25.02.2009 DE 202009002448 U
(43) Veröffentlichungstag der Anmeldung: 14.12.2011
(73) Patentinhaber: Dagn, Josef, 6345 Kössen (AT); Dagn, Rainer, 6345 Kössen (AT)
(72) Erfinder: Dagn, Josef, 6345 Kössen (AT); Dagn, Rainer, 6345 Kössen (AT)
(74) Vertreter: Klingseisen, Franz
(86) Internationale Anmeldenummer: PCT/EP2010/000589
(87) Internationale Veröffentlichungsnummer: WO 2010/089070

(56) Entgegenhaltungen:
- EP-A1- 0 499 825
- EP-A1- 1 398 184
- US-A- 4 137 101
- US-A- 4 355 556
- US-A- 4 804 031

## Beschreibung

Die Erfindung betrifft eine Vorrichtung zum Trennen eines Autoreifens von der Felge nach dem Oberbegriff des Anspruchs 1.

Eine Vorrichtung dieser Art ist aus EP 0 499 825 A1 bekannt, wobei an einem Hubschlitten ein Teleskoparm angebracht ist, an dessen freiem Ende eine kegelförmige Druckrolle über eine schräge Platte angebracht ist, die am Reifen zum Anliegen kommt, um diesen von der Felge zu trennen.

Aus US 4 137 101 A ist eine Vorrichtung bekannt, bei der über eine Gewindespindel ein Schneidmesser längs einer Führung verschiebbar ist, wobei das Schneidmesser V-förmig einen Vollgummireifen aufschneidet, der unter dem Schneidmesser positioniert ist.

US 4 355 556 A beschreibt eine Vorrichtung zum Entfernen eines drahtverstärkten Innenrandes eines Autoreifens, damit die verbleibende Karkasse geschreddert werden kann. Es ist ein rohrförmiges Messer vorgesehen, um den drahtverstärkten Innenrand auszuschneiden.

US 4 804 031 A beschreibt eine Vorrichtung zum Trennen des Reifens von einer Felge, wobei ein Stempel auf dem Umfang des Reifens angreift, um diesen zusammen mit der Felge zu deformieren.

Schließlich beschreibt EP 1 398 184 A1 ein Reifendemontiergerät, bei dem ein Werkzeug an einer Gewindespindel auf- und absenkbar angebracht ist, das am Rand des Reifenbundes angreift, um den Reifen von der Felge zu trennen.

Der Erfindung liegt die Aufgabe zugrunde, eine Vorrichtung der eingangs augegebenen Art so auszubilden, dass die zuverlässig und sicher arbeitet.

Dies wird erfindungsgemäß durch die Merkmale im Anspruch 1 erreicht. Dadurch, dass der Hubschlitten den Reifen festklemmt, während über einen am Hubschlitten angebrachten Zylinder die Felge aus dem Reifen ausgestoßen wird, ergibt sich ein zuverlässig arbeitender und sicherer Aufbau der Vorrichtung, weil

an dem Hubschlitten ein Dorn vorgesehen wird, mittels dem der Reifen beim Festklemmen durch den Hubschlitten zerstochen wird, sodass eventuell noch vorhandene Luft aus dem Reifen entweichen kann, bevor die Felge aus dem Reifen ausgestoßen wird.

Ein weiteres Merkmal für die Arbeitssicherheit ist das Vorsehen einer verschwenkbaren Schutzhaube, die selbsttätig bei der Hubbewegung des Hubschlittens aus der Bereitstellung in die Schutzstellung geschwenkt wird und umgekehrt.

Die Erfindung wird beispielsweise anhand der Zeichnung näher erläutert. Es zeigen
- Fig. 1: den Aufbau der Vorrichtung in einer Seitenansicht,
- Fig. 2: eine Vorderansicht von rechts in Fig. 1,
- Fig. 3: eine Draufsicht auf die Vorrichtung,
- Fig. 4: eine Ansicht des Doms zum Zerstechen des Reifens,
- Fig. 5: schematisch die Einrichtung zum Verschwenken der Schutzhaube,
- Fig. 6: schematisch die Vorrichtung mit Reifen und Felge auf dem Auflagetisch,
- Fig. 7: eine perspektivische Ansicht des Auflagetisches von vorne, und
- Fig. 8: eine perspektivische Ansicht des Querbalkens über dem Auflagetisch schräg von unten.

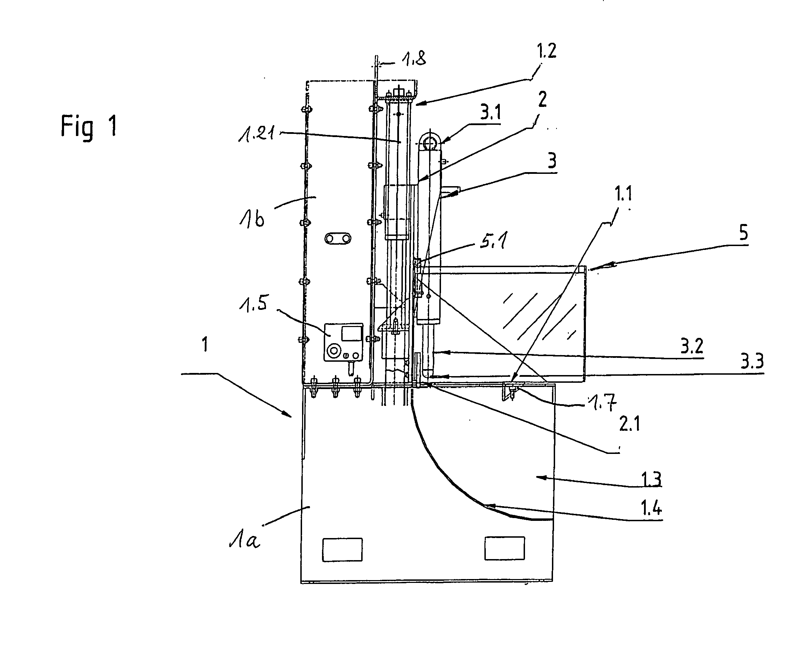

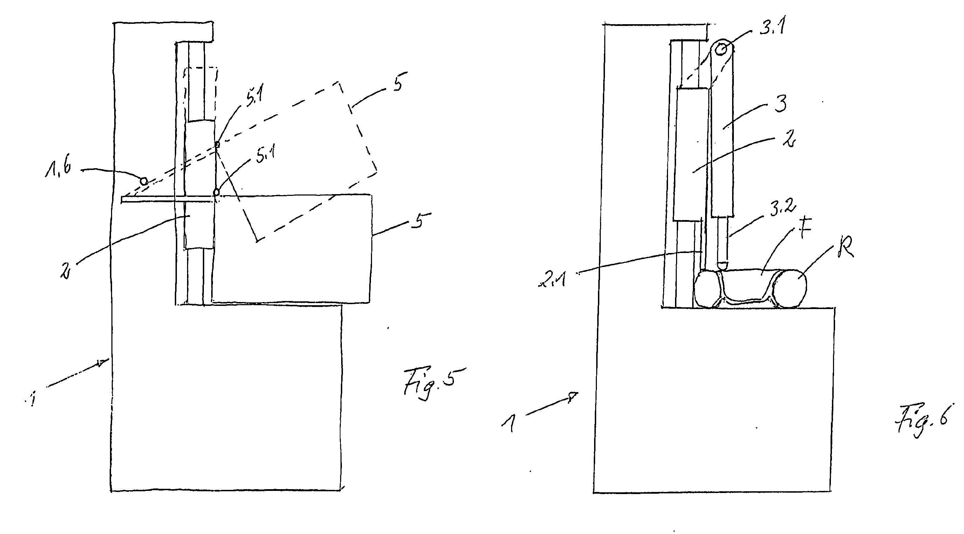

Fig. 1 zeigt einen Grundrahmen 1 mit einem Auflagetisch 1.1 für einen Reifen R mit Felge F (Fig. 6)und einer aufrechten Führung 1.2, die bei dem dargestellten Ausführungsbeispiel mit zwei Führungsstangen 1.21 versehen ist, an denen ein Hubschlitten 2 geführt ist, der durch einen nicht dargestellten Antrieb vorzugsweise in Form eines Hydraulikzylinders relativ zum Grundrahmen 1 angehoben und abgesenkt werden kann.

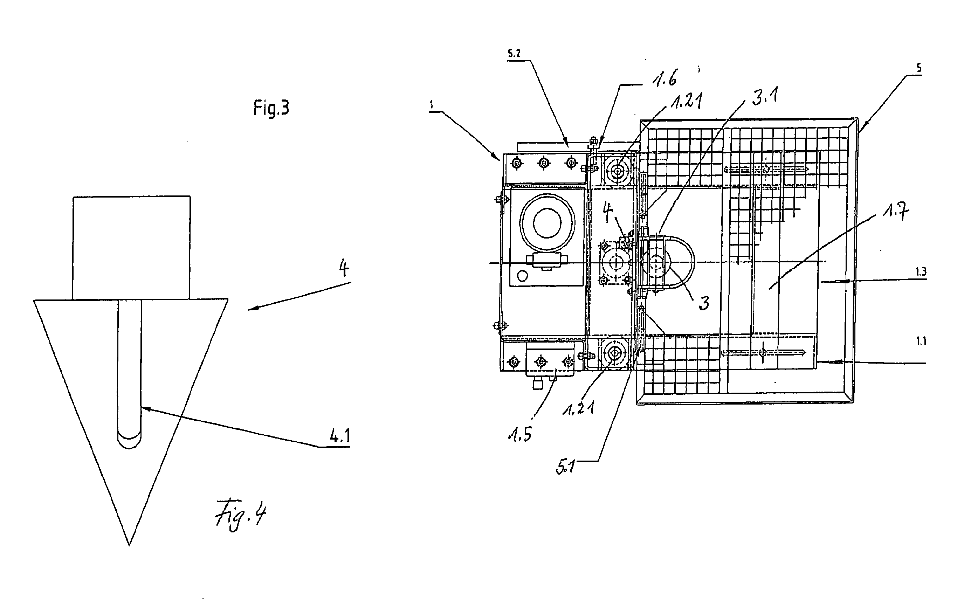

Bei dem dargestellten Ausführungsbeispiel besteht der Grundrahmen 1 aus einem Untergestell 1a, das den Auflagetisch 1.1 bildet und auf dem ein Ständer 1b aufgesetzt ist, der die Führung für den Hubschlitten trägt. Der Auflagetisch 1.1 ist in der Draufsicht (Fig. 3) im Wesentlichen durch zwei seitliche Auflageflächen ausgebildet, zwischen denen eine Ausnehmung 1.3 vorgesehen ist. Über der Ausnehmung ist ein Querbalken 1.7 angeordnet, auf dem der Reifen mit Felge zum Aufliegen kommt. Mit 1.8 ist eine Transportöse am Grundrahmen bezeichnet.

Der Hubschlitten 2 ist mit einem Ansatz 2.1 versehen, der auf dem Reifen R zum Anliegen kommt, wie Fig. 6 zeigt, sodass der Reifen zwischen diesem Ansatz 2.1 und dem Auflagetisch 1.1 festgeklemmt wird. An dem Hubschlitten 2 ist weiterhin ein Zylinder 3 bei 3.1 angelenkt, dessen Kolbenstange 3.2 relativ zum Hubschlitten 2 ausfahrbar ist, um die Felge F nach unten in die Ausnehmung 1.3 des Auflagetisches 1.1 zu drücken und dabei die Felge F vom Reifen R zu trennen. Die Kolbenstange 3.2 ist zweckmäßigerweise mit einem abgerundeten Ende versehen. Vorteilhafterweise ist das freie, abgerundete Ende 3.3 der Kolbenstange 3.2 auswechselbar an der Kolbenstange selbst angebracht, sodass bei Verschleiß das an der Felge angreifende Ende der Kolbenstange ausgewechselt werden kann.

Die Felge F fällt in die Ausnehmung 1.3 des Auflagetisches 1.1, wobei sie über eine Schräge 1.4 zur offenen Vorderseite des Auflagetisches 1.1 gleitet, aus der die Felge austritt.

Da bei Reifen mit noch vorhandener Luftfüllung ein unkontrolliertes Wegschleudern von Gummiteilen auftreten kann, wenn mittels der Kolbenstange 3.2 die Felge aus dem Reifen herausgedrückt wird, ist im Bereich des Ansatzes 2.1 am Hubschlitten 2 ein Dorn 4 angebracht, der beim Absenken des Hubschlittens 2 den Reifen R zersticht, sodass die Luft entweichen kann, bevor die Felge F ausgestoßen wird. Dieser Dorn 4 kann als Hohldorn ausgebildet sein. Vorzugsweise wird ein spitz zulaufender Dorn mit einer seitlichen, längs verlaufenden Nut 4.1 vorgesehen, durch die die Luft beim Einstechen kontrolliert entweichen kann. Durch diesen Dorn ist es auch möglich, Reifen mit Schlauch von der Felge zu trennen.

An der Seite des Grundrahmens 1 ist ein Schalter 1.5 zum Betätigen der Vorrichtung vorgesehen, nachdem ein Reifen mit Felge auf dem Auflagetisch 1.1 aufgelegt ist. Nach Betätigen des Schalters 1.5 wird der Hubschlitten 2 abgesenkt und der Reifen R eingeklemmt, wobei der Dorn 4 in den Reifen eingestochen wird, worauf der Zylinder 3 mit Druck beaufschlagt und die Kolbenstange 3.2 ausgefahren wird, die mit dem abgerundeten Ende in die vertieften Innenseite der Felge gleitet und die Felge nach unten auspresst, während der Reifen auf dem Auflagetisch 1.1 gehalten wird.

Zur Sicherung der die Vorrichtung bedienenden Person wird vorteilhafter Weise eine Schutzhäube vorgesehen, die bei Absenken des Hubschlittens 2 den Reifen mit Felge abdeckt und beim Anheben des Hubschlittens weggeschwenkt wird.

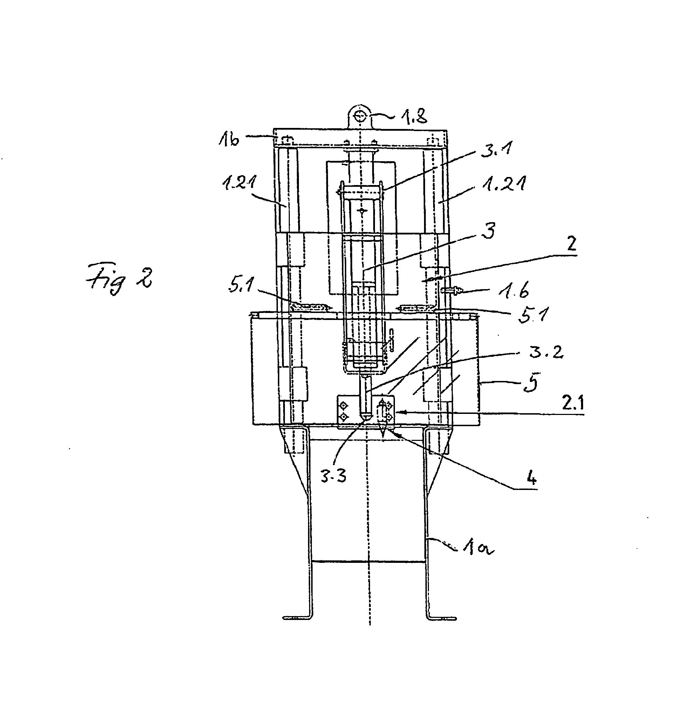

Hierfür ist bei dem dargestellten Ausführungsbeispiel am Hubschlitten 2 eine Schutzhaube 5 bei 5.1 angelenkt, die auf der rückwärtigen Seite mit einem Hebelarm 5.2 versehen ist, der beim Anheben des Hubschlittens 2 gegen ein Widerlager 1.6, vorzugsweise in Form eines Rollenlagers, an dem Grundrahmen 1 bewegt wird, sodass die Schutzhaube 5 durch Anlage des Hebelarms 5.2 an dem Widerlager 1.6 nach oben geschwenkt wird und der Arbeitsbereich auf dem Auflagetisch 1.1 freigegeben wird. Beim Absenken des Hubschlittens 2 wird die Schutzhaube 5 aufgrund ihres Eigengewichts aus der Bereitstellung nach unten in die in den Fig. 1 bis 3 wiedergegebene Schutzstellung geschwenkt. Fig. 5 zeigt in gestrichelten Linien die um das Gelenk bzw. Scharnier 5.1 nach oben geschwenkte Schutzhaube 5.

Es ist auch eine andere Anordnung zum Verschwenken der Schutzhaube 5 möglich, beispielsweise durch einen eigenen Antrieb für den Schwenkvorgang der Schutzhaube. Bevorzugt wird aber eine Anordnung, bei der die Schutzhaube 5 durch die Bewegung des Hubschlittens 2 selbsttätig bewegt wird.

Die Schutzhaube 5 kann aus Plexiglas, Gitterrost oder einem Lochblech ausgebildet sein.

An der Austrittsöffnung für die Felgen auf der Vorderseite des Auflagetisches 1.1 bzw. Grundrahmens 1 kann vorteilhafter Weise eine Trenneinrichtung vorgesehen werden, die mit zwei Förderbändern zusammenwirkt, sodass auf dem einen Förderband von einer Magneteinrichtung angezogene Stahlfelgen wegtransportiert werden, während auf dem anderen Förderband Alu-Felgen wegtransportiert werden, die nicht auf die Magneteinrichtung ansprechen.

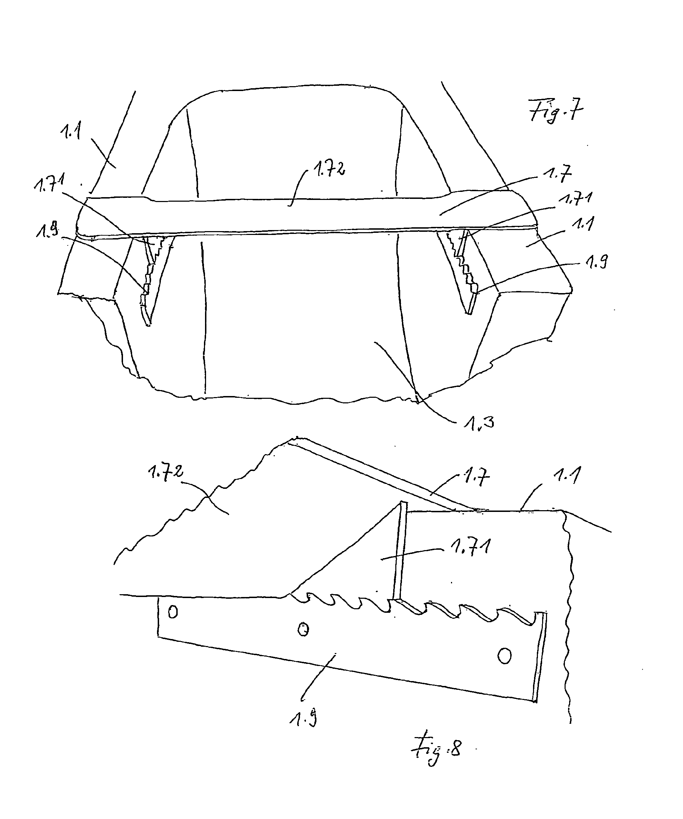

Fig. 7 zeigt in einer perspektivischen Ansicht von vorne den Querbalken 1.7 auf dem Auflagetisch 1.1, der in Richtung zum Hubschlitten 2 vor und zurück verstellbar ist. Da beim Auspressen der Felge aus dem Reifen eine Kraftkomponente an dem Querbalken in Richtung auf die Vorderseite auftritt, ist auf den beiden Seiten der Ausnehmung 1.3 eine Zahnleiste 1.9 befestigt, beispielsweise festgeschraubt, in die ein Zahnsegment 1.71 eingreift, das auf der Unterseite des Querbalkens 1.7 befestigt ist. Die Zahnform ist so gestaltet, dass sich die steilere Zahnflanke an der Zahnleiste 1.9 auf der Seite des Hubschlittens 2 befindet. Die gegenüberliegende Zahnflanke kann flacher gestaltet sein, wie Fig. 8 zeigt, damit das Ausheben und Einsetzen des Querbalkens 1.7 beim Verstellen in Abhängigkeit von der Felgengröße erleichtert wird.

Wie Fig. 8 zeigt, ist die Auflagefläche 1.72 des Querbalkens 1.7 nach innen in Richtung auf den Hubschlitten 2 geneigt ausgebildet, um beim Auspressen die Felge besser am Querbalken 1.7 abstützen zu können.

Zum Verstellen des Querbalkens 1.7 in Richtung auf den Hubschlitten kann auch eine andere Verstelleinrichtung beispielsweise mittels einer Schraube vorgesehen werden, jedoch ist die beschriebene Anordnung mit Zahnsegment 1.71 und Zahnleiste 1.9 einfacher in der Ausgestaltung und leichter zu bedienen.

Die beschriebene Vorrichtung arbeitet zweistufig, wobei zunächst der Hubschlitten abgesenkt wird, um den Reifen zu halten und gegebenenfalls mit dem Dorn zu durchstechen, worauf die Kolbenstange die Felge aus dem Reifen drückt, während der Hubschlitten in der Haltestellung verbleibt.

Bei dem beschriebenen Ausführungsbeispiel ist die Vertiefung 1.3 auf der Vorderseite, d. h. gegenüberliegend dem Hubschlitten 2, offen, wie Fig. 1 zeigt. Es ist auch möglich, die Ausnehmung 1.3 im Grundrahmen 1 auf der Vorderseite geschlossen und auf einer Seitenfläche offen zu gestalten, sodass die vom Reifen getrennte Felge seitlich und nicht nach vorne aus dem Grundrahmen 1 heraus fällt.

## Patentansprüche

1. Vorrichtung zum Trennen eines Autoreifens (R) von der Felge (F), umfassend einen Grundrahmen (1) mit einem Auflagetisch (1.1) und einer Führung (1.2) für einen Hubschlitten (2), der relativ zum Grundrahmen (1) anhebbar und absenkbar ist, und
einen am Hubschlitten (2) angebrachten Zylinder (3), dessen Kolbenstange (3.2) relativ zum Hubschlitten (2) aus- und einfahrbar ist,
**dadurch gekennzeichnet, dass**
am Hubschlitten (2) ein Dorn (4) zum Zerstechen des Reifens (R) beim Absenken des Hubschlittens vorgesehen ist.

2. Vorrichtung nach Anspruch 1, wobei der Dorn (4) spitzkegelig ausgebildet und mit einer längs verlaufenden Nut (4.1) versehen ist.

3. Vorrichtung nach einem der vorhergehenden Ansprüche, wobei eine Schutzhaube (5) vorgesehen ist, die beim Absenken des Hubschlittens (2) aus einer Bereitstellung in eine Schutzstellung über dem Auflagetisch bewegbar und beim Anheben des Hubschlittens vom Auflagetisch in die Bereitstellung bewegbar ist.

4. Vorrichtung nach Anspruch 3, wobei die Schutzhaube (5) am Hubschlitten (2) angelenkt und mit einem Hebelarm (5.2) versehen ist, der bei der Hubbewegung des Hubschlittens mit einem Widerlager (1.6) am Grundrahmen (1) zum Verschwenken der Schutzhaube zusammenwirkt.

5. Vorrichtung nach einem der vorhergehenden Ansprüche, wobei das freie Ende (3.3) der Kolbenstange (3.2) abgerundet ist.

6. Vorrichtung nach Anspruch 5, wobei das freie Ende (3.3) der Kolbenstange (3.2) als auswechselbares Teil ausgebildet ist.

7. Vorrichtung nach einem der vorhergehenden Ansprüche, wobei an der Austrittsöffnung des Auflagetisches (1.1) eine Trenneinrichtung zum Trennen von Stahl- und Alufelgen vorgesehen ist, die mit einer Magneteinrichtung versehen ist.

8. Vorrichtung nach einem der vorhergehenden Ansprüche, wobei über der Ausnehmung (1.3) des Auflagetisches (1.1) ein Querbalken (1.7) angeordnet ist, der in Richtung auf den Hubschlitten (2) vor und zurück verstellbar ist.

9. Vorrichtung nach Anspruch 8, wobei der Querbalken (1.7) eine in Richtung auf den Hubschlitten (2) geneigte Auflagefläche (1.72) aufweist.

10. Vorrichtung nach Anspruch 8 oder 9, wobei an den gegenüberliegenden Seiten der Ausnehmung (1.3) Zahnleisten (1.9) befestigt sind, in die Zahnsegmente (1.71) an der Unterseite des Querbalkens (1.7) eingreifen, sodass der Querbalken durch Anheben und Versetzen in Richtung auf den Hubschlitten (2) verstellbar ist.

## Claims

1. A device for separating an automobile tyre (R) from the rim (F), comprising a base frame (1) having a support table (1.1) and a guide (1 2) for a lifting slide (2), which is liftable and lowerable relative to the base frame (1), and
a cylinder (3) mounted on the lifting slide (2), the piston rod (3.2) of which cylinder is movable in and out relative to the lifting slide (2),
**characterised in that**
a pin (4) is provided at the lifting slide (2) for puncturing the tyre (R) when the lifting slide is lowered

2. Device according to claim 1, wherein the pin (4) is formed with a pointed cone and a longitudinally extending groove (41)

3. Device according to one of the preceding claims, wherein a protective hood (5) is provided which is movable from a ready position into a protective position above the support table when the lifting slide (2) is lowered, and is movable into the ready position from the support table when the lifting slide is lifted

4. Device according to claim 3, wherein the protective hood (5) is articulated on the lifting slide (2), and is provided with a lever arm (52) which, upon the lifting movement of the lifting slide, cooperates with an abutment (16) on the base frame (1) for pivoting the protective hood

5. Device according to one of the preceding claims, wherein the free end (3 3) of the piston rod (32) is rounded.

6. Device according to claim 5, wherein the free end (3 3) of the piston rod (3.2) is formed as an exchangeable part.

7. Device according to one of the preceding claims, wherein at the outlet opening of the support table (1.1), a separating means is provided for separating steel rims and aluminium rims, which is equipped with a magnetic means

8. Device according to one of the preceding claims, wherein above the recess (13) of the supporting table (11) a cross-beam (17) is arranged, which is displaceable forward and backward in the direction of the lifting slide (2)

9. Device according to claim 8, wherein the cross beam (1.7) has a support surface (1.72) inclined in the direction of the lifting slide (2)

10. Device according to claim 8 or 9, wherein toothed strips (1.9) are fixed on the opposite sides of the recess (1 3), and toothed segments (1.71) on the underside of the cross beam (1.7) engage the toothed strips (1.9), so that the cross bar is displaceable by lifting and moving in the direction of the lifting slide (2).

## Revendications

1. Dispositif pour séparer un pneumatique d'automobile (R) d'une jante (F), comprenant un châssis (1) ayant une table de support (1 1) et une guide (1 2) pour un coulisseau de levage (2) qui est soulevable et abaissable par rapport au châssis (1), et
un cylindre (3) monté sur le coulisseau de levage (2), duquel cylindre la tige de piston (3 2) est déplaçable de manière à pouvoir être sorti ou rentré par rapport au coulisseau de levage (2),
**caractérisé en ce qu'**un mandrin (4) est fourni au coulisseau de levage (2) pour crever le pneumatique (R) quand le coulisseau de levage est abaissé

2. Dispositif selon la revendication 1, dans lequel le mandrin (4) est formé en forme de cône pointu et fourni avec une rainure (4.1) qui s'étend longitudinalement

3. Dispositif selon l'une des revendications précédentes, dans lequel une chape de protection (5) est fournie, qui est déplaçable d'une position de veille dans une position protective au-dessus de la table de support quand le coulisseau de levage (2) est abaissé, et qui est déplaçable de la table de support dans la position de veille quand le coulisseau de levage est soulevé.

4. Dispositif selon la revendication 3, dans lequel la chape de protection (5) est articulée sur le coulisseau de levage (2) et fournie avec un bras de levier (5 2) qui coopère avec une butée (1.6) au châssis (1) en cas de mouvement de levage du coulisseau de levage, pour pivoter la chape de protection

5. Dispositif selon l'une des revendications précédentes, dans lequel l'extrémité libre (3.3) de la tige de piston (3.2) est arrondie

6. Dispositif selon la revendication 5, dans lequel l'extrémité libre (3 3) de la tige de piston (3.2) est formée comme partie échangeable

7. Dispositif selon l'une des revendications précédentes, dans lequel un dispositif de séparation pour séparer des jantes d'acier et des jantes d'aluminium, qui est pourvu d'un dispositif magnétique, est fourni au trou de sortie de la table de support (1.1).

8. Dispositif selon l'une des revendications précédentes, dans lequel une barre transversale (17) est disposée au-dessus de l'évidement (1.3) de la table de support (1 1), laquelle barre est déplaçable en avant et en arrière en direction du coulisseau de levage (2)

9. Dispositif selon la revendication 8, dans lequel la barre transversale (1.7) a une surface de support (1 72) inclinée vers le coulisseau de levage (2)

10. Dispositif selon la revendication 8 ou 9, dans lequel des crémaillères (1.9) sont fixées sur les côtés opposés de l'évidement (1.3), dans lesquelles crémaillères des secteurs dentés (1.71) sur le dessous de la barre transversale (1.7) s'enclenchent, de telle façon que la barre transversale soit déplaçable par le soulevage et le déplacement vers le coulisseau de levage (2).
